# EUROPEAN PATENT SPECIFICATION

(11) **EP 2 157 070 B1**
(45) Date of publication and mention of the grant of the patent: **25.10.2017**
(21) Application number: 09168181.7
(22) Date of filing: 19.08.2009
(51) Int. Cl.: C04B 41/53, C04B 24/06, B28B 7/36, B28B 7/38, C04B 103/22

(54) **METHOD FOR RETARDING THE SETTING OF THE SURFACE OF A CONCRETE USING ESTER-BASED CONCRETE SURFACE RETARDERS**
VERFAHREN ZUR ABBINDEVERZÖGERUNG VON BETONOBERFLÄCHEN MITTELS ESTERBASIERTEN BETONFLÄCHENVERZÖGERERN
PROCÉDÉ POUR RETARDER LA PRISE DES SURFACES DE BÉTON AU MOYEN DE RETARDATEURS DE PRISE À BASE D'ESTER

(30) Priority: 21.08.2008 FR 0804664
(43) Date of publication of application: 24.02.2010
(73) Proprietor: GCP Applied Technologies Inc., Cambridge, MA 02140 (US)
(72) Inventor: Vincent, Dany, 71500 Chateaurenaud (FR); Dananche, Eric, 39570 Courlaoux (FR); Quern, Ralf, 31812 Bad Pyrmont (DE); Chun, Byong-Wa, Newton, MA 02458 (US)
(74) Representative: Hirsch & Associés

(56) References cited:
- EP-A- 1 914 054
- CH-A5- 683 244
- FR-A- 2 473 579
- GB-A- 405 508
- GB-A- 2 421 213
- US-A- 4 205 040
- US-A1- 2006 289 387
- US-B2- 7 037 367
- CHEMICAL ABSTRACTS, vol. 118, no. 4, 25 January 1993 (1993-01-25), Columbus, Ohio, US; abstract no.: 26616k, N.FUKUSHIMA: "Manufacture of concrete articles by scrubbing finish process" XP000353082 & JP 04 275988 A (MITSUBISHI MATERIALS CORP; MITSUBISHI MATERIAL KENZAI KK) 1 October 1992 (1992-10-01)

## Description

### FIELD OF THE INVENTION

The present invention relates to retarding of concrete surfaces, and particularly to surface retarder compositions comprising oil/solvent-soluble or oil-dispersible alkyl-ester-of-hydroxycarboxy compounds for concrete, mortar, and other hydratable cementitious material applications.

### BACKGROUND OF THE INVENTION

Surface retarders are compositions used for treating the surface of cement and concrete compositions. For example, fresh concrete containing aggregates is poured and leveled, and then the retarder is sprayed as an aqueous solution onto the surface at a rate of about 200 g/m². After a number of hours, the treated surface may be washed off with a high pressure water jet to remove uncured cement and to expose the aggregates on the surface.

US Patent 7,037,367 B2 of Mauchamp et al. disclosed compositions wherein a surface retarder active (e.g., an acid-based compound including a malic, tartaric, citric, gluconic, or heptagluconic acid) was suspended in a vegetable oil derivative such as mono and diglycerides of C6-C30 fatty acids, esters of C6-C30 fatty acids, C6-C30 fatty alcohols, C6-C30 fatty amines, C6-C30 fatty amides, and tall oil derivatives. This permitted the spray application of a wet film coating that provided the retarder active with a favorable opportunity to penetrate into the cement surface for efficacious etching of the cement.

The present inventors believe that novel surface retarder compositions and methods are needed for obtaining pH neutrality, or at least for obtaining decreased acidity, in order to minimize the corrosive effects of acid-based retarders and to avoid irritating fogs when the retarder treatment is spray-applied onto the concrete, while still obtaining clear etches in the concrete surface.

It is an objective of the present invention to provide such novel compositions and methods.

### SUMMARY OF THE INVENTION

The present invention provides a method for retarding the surface of a concrete as described in claim 1 comprising spray-applying a surface retarder composition comprising at least one oil/solvent-soluble or oil-dispersible alkyl-ester-of-hydroxycarboxy compound, contained in the form of particles or as a discontinuous liquid phase, distributed within a continuous non-aqueous carrier phase that is spray-applicable in liquid form.

The alkyl-ester-of-hydroxycarboxy compounds of the invention are selected from the group consisting of an alkyl ester of citric acid, an alkyl ester of tartaric acid, an alkyl ester of malic acid, an alkyl ester of gallic acid, an alkyl ester of glycolic acid, an alkyl ester of gluconic acid, an alkyl ester of lactic acid, an alkyl ester of mandelic acid, an alkyl ester of salicylic acid, and an alkyl ester of 4-hydroxybutanoic acid.

Preferred alkyl-ester-of-hydroxycarboxy compounds of the invention n have alpha-hydroxycarbonyl groups or alkyl-ester of hydroxycarboxylic acid. Most preferred are alkyl esters of citric acid (e.g., triethyl citrate) and alkyl esters of tartaric acid (e.g., diethyl tartarate).

The continuous non-aqueous oil/solvent or oil/carrier carrier liquid phase comprises a petroleum-based solvent, a vegetable oil, an animal oil, or mixture or derivative thereof.

The method of the invention comprises spray-applying said surface retarder compositions onto a surface of a concrete or mortar or other hydratable cementitious material, so as to retard the curing thereof. The portion of the surface of said cementitious material on which said retarder composition has been applied may then be removed by spraying a jet of water to remove the retarded portion of the surface material. The compositions may also be applied onto concrete molds before the concrete composition is poured into the molds and used as mold-release coatings.

The present invention is believed to provide advantages over the prior art in terms of permitting a pH level that is less acidic. Another advantage, where the ester-based retarder component is used in solid powder form, is that retarder particles can be easier to incorporate into the spray-applicable liquid carrier in the manufacturing process, because the raw material can be obtained in solid particles that do not require a time-consuming grinding step.

Further, the alkyl-ester-based hydroxycarboxy surface retarder compounds used in the invention are believed to operate with enhanced activity as the pH of the concrete composition increases, thus conferring a "latent" retarding capability that is believed to achieve sharper etchings in the concrete material.

Conventional set retarders, pigments, fillers, and other ingredients may be mixed into the set retarder composition as desired.

Other features and advantages of the invention are described in greater detail hereinafter.

### DETAILED DESCRIPTION OF EXEMPLARY EMBODIMENTS

As used herein, the terms "cement" and "cementitious composition" (which are synonomous with "cement composition") are understood to refer to pastes, mortars, and concrete compositions comprising a hydratable cement binder. The terms "paste", "mortar" and "concrete" are terms of art: "pastes" are mixtures composed of a hydratable cement binder (usually, but not exclusively, Portland cement, masonry cement, or mortar cement, and this binder may also include limestone, hydrated lime, fly ash, granulated blast furnace slag, pozzolans, and silica fume or other materials commonly included in such cements) and water; "mortars" are pastes additionally including fine aggregate (e.g., sand), and "concretes" are mortars additionally including coarse aggregate (e.g., crushed gravel, stone). The cementitious compositions used in this invention may be formed by mixing required amounts of certain materials, e.g., a hydratable cement, water, and fine and/or coarse aggregate, as may be applicable to make the particular cement composition being formed.

All percentages of components described or claimed herein shall be in terms of total weight of the composition unless otherwise indicated.

As previously summarized, the surface retarder composition used in the invention comprises at least one alkyl-ester-of-hydroxycarboxy compound, including partial and/or par esters, which is oil/solvent-soluble or oil-dispersible. Preferably, although not necessarily, such alkyl esters may be water-insoluble at ambient temperature, and have at least one or more terminal carboxylic acid (-COOH) groups. Most preferred are alkyl esters having alpha-hydroxycarbonyl group [-CR-(OH)-C(=)-] or alkyl-ester of hydroxycarboxylic acid.

The alky-ester-of-hydroxycarboxy compounds that are believed suitable for use in the invention are selected from the group consisting of an alkyl ester of citric acid (citric acid is otherwise known as 2-hydroxy-1,2,3-propanetricarboxylic acid, HOOCCH2C(OH)(COOH)CH2COOH•H2O); an alkyl ester of tartaric acid (tartaric acid is otherwise known as dihydroxysuccinic acid, HOOC(CHOH)2COOH); an alkyl ester of malic acid (malic acid is otherwise known as hydroxysuccinic acid, COOHCH2CH(OH)COOH); an alkyl ester of gallic acid (gallic acid is otherwise known as 3,4,5-trihydroxybenzoic acid, C6H2(OH)3COOH); an alkyl ester of glycolic acid (glycolic acid is otherwise known as hydroxyacetic acid, CH2OHCOOH); an alkyl ester of gluconic acid (gluconic acid may be represented by the formula CH2OH(CHOH)4COOH); an alkyl ester of lactic acid (lactic acid may be represented by the formula CH3CHOHCOOH); an alkyl ester of mandelic acid (mandelic acid may be represented by the formula, C6H5CHOHCOOH); an alkyl ester of salicylic acid (salicylic acid may be represented by the formula, C6H4(OH)COOH); and an alkyl ester of 4-hydroxybutanoic acid.

As previously mentioned, preferred alkyl ester surface retarder compounds used in the invention include esters of citrate, tartarate, or mixtures thereof. It is believed by the inventors that a number of esters of citrates and tartarates are commercially available and are suitable for use in the invention. For example, methyl citrate and methyl tartarate, ethyl citrate and ethyl tartarate, and butyl citrate and butyl tartarate are commercially available. Also available is acetyltributylcitrate and dibenzyltartarate.

Given the fact that esters can be broken down by the alkaline environment of the cement in the concrete, the ethyl form (e.g., ethyl citrate, ethyl tartarate) is among the most preferred of these.

The alkyl-ester-containing hydroxycarboxy compositions used in the invention are oil/solvent-soluble and/or oil-dispersible. In other words, they should be compatible with the non-aqueous, oil/solvent liquid or oil carrier liquid such that they can be dissolved within and/or carried as solid particles dispersed within the continuous non-aqueous carrier phase which is spray-applicable as a liquid.

The continuous liquid phase which functions as a carrier or solvent is petroleum-based or derived from vegetable oil, animal oil, or a mineral oil, or derivative thereof, and is spray-applicable at ambient temperature. The amount of the continuous oil carrier liquid (e.g., vegetable oil) or oil solvent (e.g., petroleum resin) is preferably 1-98% by total weight of the liquid-applicable surface retarder composition, more preferably 25-92% by total weight of the composition, and most preferably 50-90% by total weight of the composition.

The total amount of alkyl ester surface retarder component dispersed, dissolved, or otherwise distributed within the continuous liquid carrier phase, including any other compounds commonly used with surface retarders (e.g., pigments and fillers) is preferably contained in the range amount of 1%-20% based on total weight of the composition.

Where petroleum-based solvents or liquid carriers are not desired from an environmental standpoint, vegetable-oil based or mineral oil based liquid carriers may be employed, as disclosed in US Patent No. 7,037,367 B2 of Mauchamp et al . As defined therein, the term "vegetable oil" means a product (whether in liquid, paste, or solid form) extracted from the seeds, fruit, or nuts of plants and sap trees (such as hevea sap, maple, lignosulfonates, pinetree sap). Vegetable oils are generally considered to be a mixture of mixed glycerides (See e.g., Hawley's Condensed Chemical Dictionary, Ed. N. Irving Sax, Richard J. Lewis, Sr., 11th Ed. (Von Nostrand Reinhold Company, New York 1987), page 1219 ). Vegetable oils include but are not limited to: rapeseed oil, sunflower oil, soy bean oil, castor oil, peanut oil, grape seed oil, corn oil (e.g., including corn germ oil), canola oil, coconut oil, linseed oil, sesame oil, olive oil, palm oil, almond oil, avocado oil, china wood oil, cocoa oil, safflower oil, hemp seed oil, walnut oil, poppy seed oil, oiticaca oil (e.g., obtained by expression from the seeds of the Brazilian oiticaca tree, Licania rigida), palm nut oil, perilla oil, pecan oil, tung oil, and pine tar oil. If rapeseed oil is used, this can be in the amount of 50% or more by total weight of the composition.

For example, an exemplary composition used in the invention comprises diethyl tartarate or triethyl citrate as the preferred ester-based hydroxycarboxy compounds, and either or both of these can be optionally combined with a conventional retarder, such as a sugar (e.g., gluconate, sucrose) and dispersed in a vegetable oil, such as rapeseed oil, in which the retarder:oil ratio can be 10:90 to 90:10 and more preferably 20:80 to 80:20, based on total weight of the composition.

In further embodiments, a vegetable oil derivative for dispersing the retarder actives may be selected from the group of mono and diglycerides of C6-C30 fatty acids, esters of C6-C30 fatty acids, ethoxylated compounds of C6-C300 fatty acids, C6-C30 fatty alcohols, C6-C30 fatty amines, C6-C30 fatty amides, and tall oil derivatives.

As noted by Mauchamp et al., the list of potential vegetable oil and animal oil derivatives believed useful for purposes of the present invention is rather large. An exemplary list was in World Patent Application No. WO 85/05066 (International Publication No.) of Nielsen et al., International Patent Application No. PCT/CK85/00043, beginning at page 16; and these are also believed to be suitable for dispersing or otherwise carrying the ester-based hydroxycarboxy set retarder component of the present invention.

The derivatives include hexyl acetate, 2-ethylhexyl acetate, octyl acetate, isooctyl acetate, cetyl acetate, dodecyl acetate, tridecyl acetate; butyl butyrate, isobutyl butyrate, amyl isobutyrate, hexyl butyrate, heptyl butyrate, isoheptyl butyrate, octyl butyrate, isooctyl butyrate, 2-ethylhexyl butyrate, nonyl butyrate, isononyl butyrate, cetyl butyrate, isocetyl butyrate; ethyl hexanoate, propyl hexanoate, isopropyl hexanoate, butyl hexanoate, isobutyl hexanoate, amyl hexanoate, hexyl hexanoate, heptyl hexanoate, isoheptyl hexanoate, octyl hexanoate, 2-ethylhexyl hexanoate, nonyl hexanoate, isonynyl hexanoate, cetyl hexanoate, isocetyl hexanoate; methyl octanoate, ethyl octanoate, propyl octanoate, isopropyl octanoate, butyl octanoate, isobutyl octanoate, amyl octanoate, hexyl octanoate, heptyl octanoate, isoheptyl octanoate, octyl octanoate, isooctyl octanoate, 2-ethylhexyl octanoate, nonyl octanoate, isononyl octanoate, cetyl octanoate, isocetyl octanoate; methyl 2-ethylhexanoate, ethyl 2-ethylhexanoate, propyl 2-ethylhexanoate, isopropyl 2-ethylhexanoate, butyl 2-ethylhexanoate, isobutyl 2-ethylhexanoate, isoamyl 2-ethylhexanoate, hexyl 2-ethylhexanoate, heptyl 2-ethylhexanoate, isoheptyl 2-ethylhexanoate, octyl 2-ethylhexanoate, isooctyl 2-ethylhexanoate, 2-ethylhexyl 2-ethylhexanoate, nonyl 2-ethylhexanoate, isononyl 2-ethylhexanoate, cetyl 2-ethylhexanoate, isocetyl 2-ethylhexanoate; methyl decanoate, ethyl decanoate, propyl decanoate, isopropyl decanoate, butyl decanoate, isobutyl decanoate, isoamyl decanoate, hexyl decanoate, heptyl decanoate, isoheptyl decanoate, octyl decanoate, isooctyl decanoate, 2-ethylhexyl decanoate, nonyl decanoate, isononyl decanoate, cetyl decanoate, isocetyl decanoate; methyl laurate, ethyl laurate, propyl laurate, isopropyl laurate, butyl laurate, isobutyl laurate, isoamyl laurate, hexyl laurate, heptyl laurate, isoheptyl laurate, octyl laurate, isooctyl laurate, 2-ethylhexyl laurate, nonyl laurate, isononyl laurate, cetyl laurate, isocetyl laurate; ethyl oleate, propyl oleate, isopropyl oleate, butyl oleate, isobutyl oleate, isoamyl oleate, hexyl oleate, heptyl oleate, isoheptyl oleate, octyl oleate, isooctyl oleate, 2-ethylhexyl oleate, nonyl oleate, isononyl oleate, cetyl oleate, isocetyl oleate; diethyl succinate, dipropyl succinate, diisopropyl succinate, dibutyl succinate, diisobutyl succinate, diisoamyl succinate, dihexyl succinate, diheptyl succinate, diisoheptyl succinate, dioctyl succinate, diisooctyl succinate, di-2-ethylhexyl succinate, dinonyl succinate, diisononyl succinate, dicetyl succinate, diisocetyl succinate; dimethyl adipate, diethyl adipate, dipropyl adipate, diisopropyl adipate, dibutyl adipate, diisobutyl adipate, diisoamyl adipate, dihexyl adipate, diheptyl adipate, diisoheptyl adipate, dioctyl adipate, diisooctyl adipate, di-2-ethylhexyl adipate, dinonyl adipate, diisononyl adipate, dicetyl adipate, diisocetyl adipate; isopropyl myristate, isobutyl myristate, butyl myristate, amyl myristate, hexyl myristate, heptyl myristate, isoheptyl myristate, octyl myristate, 2-ethylhexyl myristate, nonyl myristate, isononyl myristate, cetyl myristate, isocetyl myristate; isopropyl palmitate, isobutyl palmitate, butyl palmitate, amyl palmitate, hexyl palmitate, heptyl palmitate, isoheptyl palmitate, octyl palmitate, 2-ethylhexyl palmitate, nonyl palmitate, isononyl palmitate, cetyl palmitate, isocetyl palmitate; isopropyl stearate, isobutyl stearate, butyl stearate, amyl stearate, hexyl stearate, heptyl stearate, isoheptyl stearate, octyl stearate, 2-ethylhexyl stearate, nonyl stearate, isononyl stearate, cetyl stearate, and isocetyl stearate.

Vegetable oils useful in the invention may be essential oils. The term "essential" means and refers to oils that contain the characteristic odor or flavor (i.e., the essence) of the original flower or fruit. An essential oil is usually obtained by steam distillation of the flowers or leaves or cold pressing of the skin or other parts (e.g., stem, flower, twigs, etc.). Exemplary essential oils include orange, grapefruit, lemon, citrus, and pinetree.

In other exemplary surface retarder compositions used in the invention, the ester-based hydroxycarboxy set retarder compound can be dispersed in animal oil or its derivative, which can be used instead of, or in combination with, a vegetable oil or its derivative. The term "animal oil" refers to a product (whether oil, wax, or solid form) obtained from any animal substance, such as bone or other body component. Examples include lard oil, bone oil, herring oil, cod liver oil, neatsfoot oil, sardine oil, lanoline oil, fish oil, sheep wool oil, tallow oil, and bees wax. Derivatives of animal oils preferably include mono and diglycerides of C6-C30 fatty acids, esters of C6-C30 fatty acids, ethoxylated compounds of C6-C30 fatty acids, C6-C30 fatty alcohols, C6-C30 fatty amines, C6-C30 fatty amides, and tall oil derivatives. (See also list provided above in discussion of vegetable oil derivatives).

It is further contemplated that mixtures of animal oil and vegetable oil can be employed for various purposes. For example, pinetree oil can be used to cover or mask the smell of sheep wool oil. An exemplary surface retarder composition could comprise sunflower methylester (40%), sheep wool oil (25%), sucrose (9%), iron oxide ((2%), kieselguhr (22%), and pinetree oil (2%), all percentages based on total weight of the composition.

In further exemplary surface retarder compositions, the retarding actives may be dispersed in two or more different vegetable oils. Thus, for example, the actives may be dispersed or otherwise distributed within a continuous oil carrier phase comprising a vegetable oil as well as a vegetable oil derivative. The vegetable oil(s) and/or animal oil(s) function preferably as a continuous carrier phase within which to suspend or otherwise distribute one or more retarding actives dispersed throughout as a discontinuous phase.

In still further exemplary surface retarder compositions, the one or more ester-based set retarders may be combined with one or more conventional set retarders (e.g., sodium gluconate) in one or more oils.

Petroleum solvents and resins may also be employed to solvate or suspend the surface retarders, and these may be used alone or in combination with the afore-mentioned vegetal oils, mineral oils, and/or animal oils.

In further exemplary surface retarder compositions used in the invention, optional compounds can be incorporated, such as fillers including calcium carbonate, silicon dioxide, sand, mica, talc, clay (e.g., kaolin), barium sulfate, sodium silico-aluminates, alumina, barium carbonate, dolomite (which is a carbonate of calcium and magnesium, CaMg(CO3)2), magnesium carbonate, magnesium oxide, kieslguhr (diatomaceous earth), or a mixture of any of the foregoing. The total filler content may be, for example, 0-50% based on total weight of the surface retarder composition.

Still further exemplary surface retarder compositions used in the invention may also include one or more pigments, colorants, or dyes, such as titanium dioxide, iron oxide, chromium oxide, cobalt oxide, zinc oxide, carbon black, or other pigments or colorants, in an amount of 0-30% by total weight of the composition. It is desirable to employ at least one pigment, colorant, or dye such that an applicator can visually confirm, such as during a spray application, that a particular targeted cementitious surface has been treated with the surface retarder composition.

Other exemplary surface retarder compositions used in the invention may additionally include other components, such as sorbitol, boric acid (or its salt), alkylphosphates, proteins, and casein. These may further components may be used for affecting various properties of the surface retarder compositions, such as rheology, viscosity, and/or surface tension. Accordingly, further embodiments include one or more rheology modifiers and/or viscosity modifiers.

## Claims

1. A method for retarding the surface of a concrete, mortar or other cementitious composition composed of a hydratable cement binder, comprising
spray-applying a liquid surface-retarder composition onto the surface of a concrete or mortar or other cementitious material so as to retard the curing thereof, or otherwise onto a surface of a mold and thereafter pouring a concrete or mortar or other cementitious material onto the sprayed mold surface, wherein the surface retarder composition comprises at least one oil/solvent-soluble or oil-dispersible alkyl-ester compound contained in the form of particles or as a discontinuous liquid phase distributed within a continuous non-aqueous carrier phase
said alkyl-ester compound being selected from the group of an alkyl ester of citric acid, an alkyl ester of tartaric acid, an alkyl ester of malic acid, an alkyl ester of gallic acid, an alkyl ester of glycolic acid, an alkyl ester of gluconic acid, an alkyl ester of lactic acid, an alkyl ester of mandelic acid, an alkyl ester of salicylic acid, or an alkyl ester of 4-hydroxybutanoic acid, and
said continuous non-aqueous carrier phase comprising a petroleum-based solvent, a vegetable oil, an animal oil, a mineral oil, a mixture or derivative thereof.

2. The method of claim 1 wherein said at least one alkyl-ester compound is an alkyl ester of citric acid.

3. The method of claim 2 wherein said at least one alkyl ester compound is triethyl citrate.

4. The method of claim 1 wherein said at least one alkyl-ester compound is an alkyl ester of tartaric acid.

5. The method of claim 4 wherein said alkyl ester of tartaric acid is diethyl tartarate.

6. The method of claim 1 wherein said at least one alkyl-ester compound is a mixture of triethyl citrate and diethyl tartarate.

7. The method of claim 1 wherein said retarder composition further comprises: (A) at least one filler selected from calcium carbonate, silicon dioxide, sand, mica, talc, clay, barium sulfate, sodium silico-aluminate, alumina, barium carbonate, dolomite, magnesium carbonate, magnesium oxide, kieselghur (diatomaceous earth), or a mixture thereof; (B) at least one additive selected from the group consisting of a pigment, a colorant, or a dye comprising titanium dioxide, iron oxide, chromium oxide, cobalt oxide, zinc oxide, carbon black, or mixture thereof.

8. The method of claim 1 wherein said at least one alkyl-ester compound comprises diethyl tartarate, triethyl citrate, or a mixture thereof contained in a solid particle form that is dispersed in a vegetable oil which is said continuous non-aqueous carrier phase which is spray-applied in liquid form.

9. The method of claim 8 wherein said vegetable oil is rapeseed oil; and said composition further comprises titanium dioxide.

10. The method of claim 1 wherein said surface-retarder composition is spray-applied onto the surface of a concrete, mortar, or other cementitious composition and thereafter a portion of said surface is removed by spraying water.

11. The method of claim 1 wherein said surface-retarder composition is spray-applied onto a concrete mold and thereafter a concrete, mortar, or other cementitious composition is poured against said spray-applied concrete mold.

## Patentansprüche

1. Ein Verfahren zur Abbindeverzögerung von Beton- oder Mörteloberflächen oder Oberflächen anderer zementartiger Zusammensetzungen, bestehend aus einem hydratisierbaren Zementbinder, welcher die Spritzaufbringung einer flüssigen Flächenverzögerer-Zusammensetzung auf Beton- oder Mörteloberflächen oder anderes zementartiges Material, um deren Härtung zu verzögern, oder anderweitig auf eine Oberfläche einer Form, und das nachfolgende Gießen von Beton oder Mörtel oder anderem zementartigen Material auf die aufgesprühte Formoberfläche umfasst, wobei die Flächenverzögerer-Zusammensetzung mindestens eine Öl/Lösungsmittel lösliche oder öldispergierbare Alkylester-Verbindung umfasst, die in Form von Teilchen oder als eine diskontinuierliche flüssige Phase enthalten ist, die innerhalb einer kontinuierlichen nichtwässrigen Trägerphase verteilt ist
- wobei die Alkylester-Verbindung aus der Gruppe eines Alkylesters der Zitronensäure, eines Alkylesters der Weinsäure, eines Alkylesters der Apfelsäure, eines Alkylesters der Gallussäure, eines Alkylesters der Glykolsäure, eines Alkylesters der Glukonsäure, eines Alkylesters der Milchsäure, eines Alkylesters der Mandelsäure, eines Alkylesters der Salicylsäure oder eines Alkylesters der 4-Hydroxybuttersäure ausgewählt ist
- wobei die kontinuierliche nichtwässrige Trägerphase ein petroleumbasiertes Lösungsmittel ein pflanzliches Öl, ein tierisches Öl, ein Mineralöl, eine Mischung oder ein Derivat davon umfasst.

2. Das Verfahren nach Anspruch 1, wobei die mindestens eine Alkylester-Verbindung ein Alkylester der Zitronensäure ist.

3. Das Verfahren nach Anspruch 2, wobei die zumindest eine Alkylester-Verbindung Triethylcitrat ist.

4. Das Verfahren nach Anspruch 1, wobei die zumindest eine Alkylester-Verbindung ein Alkylester der Weinsäure ist.

5. Das Verfahren nach Anspruch 4, wobei das Alkylester Diethyltartrat ist.

6. Das Verfahren nach Anspruch 1, wobei die zumindest eine Alkylester-Verbindung eine Mischung aus Triethylcitrat und Diethyltartrat ist.

7. Das Verfahren nach Anspruch 1, wobei die Flächenverzögerer-Zusammensetzung ferner Folgendes umfasst:
(A) mindestens einen Füllstoff, ausgewählt aus Calciumcarbonat, Siliciumdioxid, Sand, Mika, Talk, Ton, Bariumsulfat, Natriumsilicoaluminat, Aluminiumoxid, Bariumcarbonat, Dolomit, Magnesiumcarbonat, Magnesiumoxid, Kieselgur (Diatomeenerde), oder eine Mischung davon;
(B) mindestens ein Additiv, ausgewählt aus einer Gruppe bestehend aus einem Pigment, einem Farbstoff oder einem Farbstoff der Titandioxid, Eisenoxid, Chromoxid, Kobaltoxid, Zinkoxid, Rußschwarz oder eine Mischung davon umfasst.

8. Das Verfahren nach Anspruch 1, wobei die zumindest eine Alkylester-Verbindung, Diethyltartrat, Triethylcitrat oder eine, in Festteilchen enthaltende Mischung davon umfasst, die in einem pflanzlichen Öl dispergiert ist, welches die kontinuierliche nichtwässrige Trägerphase darstellt, die in flüssiger Form aufgespritzt wird.

9. Das Verfahren nach Anspruch 8, wobei das pflanzliche Öl Rapsöl ist; und wobei diese Zusammensetzung ferner Titandioxid umfasst.

10. Das Verfahren nach Anspruch 1, wobei die Flächenverzögerer-Zusammensetzung auf die eine Betonoder eine Mörteloberfläche oder eine andere zementartige Oberfläche aufgespritzt wird und anschließend ein Teil dieser Oberfläche durch Aufspritzen von Wasser entfernt wird.

11. Das Verfahren nach Anspruch 1, wobei die Flächenverzögerer-Zusammensetzung auf eine Betonform aufgespritzt wird und anschließend ein Betonmörtel oder eine andere zementartige Zusammensetzung auf die aufgespritzte Betonform gegossen wird.

## Revendications

1. Procédé pour retarder la prise de surface d'un béton, mortier ou autre composition cimentaire composée d'un liant pour ciment hydratable, comprenant
l'application par pulvérisation d'une composition liquide de retardateur de surface sur la surface d'un béton, ou mortier ou d'un autre matériau cimentaire, de façon à retarder sa prise, ou sinon sur une surface de moule, avant versage d'un béton ou d'un mortier ou d'un autre matériau cimentaire sur la surface de moule ayant été pulvérisée, dans lequel la composition de retardateur de surface comprend au moins un ester alkylique soluble dans les huiles/solvants ou capable de dispersion dans les huiles, contenu sous la forme de particules ou sous la forme d'une phase liquide discontinue distribuée dans une phase support continue non aqueuse
ledit ester alkylique étant choisi dans le groupe d'un ester alkylique de l'acide citrique, d'un ester alkylique de l'acide tartrique, d'un ester alkylique de l'acide malique, d'un ester alkylique de l'acide gallique, d'un ester alkylique de l'acide glycolique, d'un ester alkylique de l'acide gluconique, d'un ester alkylique de l'acide lactique, d'un ester alkylique de l'acide mandélique, d'un ester alkylique de l'acide salicylique, ou d'un ester alkylique de l'acide 4-hydroxybutanoïque, et
ladite phase support continue non aqueuse comprenant un solvant à base de pétrole, une huile végétale, une huile animale, une huile minérale, un mélange ou un dérivé de ceux-ci.

2. Procédé selon la revendication 1 dans lequel ledit au moins un ester alkylique est un ester alkylique de l'acide citrique.

3. Procédé selon la revendication 2 dans lequel ledit au moins un ester alkylique est un citrate de triéthyle.

4. Procédé selon la revendication 1 dans lequel ledit au moins un ester alkylique est un alkylester d'acide tartrique.

5. Procédé selon la revendication 4 dans lequel ledit ester alkylique d'acide tartrique est un tartrate de diéthyle.

6. Procédé selon la revendication 1 dans lequel ledit au moins un ester alkylique est un mélange de citrate de triéthyle et de tartrate de diéthyle.

7. Procédé selon la revendication 1 dans lequel ladite composition retardatrice comprend en outre : (A) au moins une charge choisie parmi le carbonate de calcium, le dioxyde de silicium, le sable, le mica, le talc, l'argile, le sulfate de baryum, le silico-aluminate de sodium, l'alumine, le carbonate de baryum, la dolomite, le carbonate de magnésium, l'oxyde de magnésium, le kieselguhr (terre de diatomées), ou un de leurs mélanges ; (B) au moins un additif choisi dans le groupe constitué par un pigment, un colorant, ou une teinture comprenant le dioxyde de titane, l'oxyde de fer, l'oxyde de chrome, l'oxyde de cobalt, l'oxyde de zinc, le noir de carbone, ou un de leurs mélanges.

8. Procédé selon la revendication 1 dans lequel ledit au moins un ester alkylique comprend le tartrate de diéthyle, le citrate de triéthyle, ou un de leurs mélanges, contenu dans une particule solide qui est dispersée dans une huile végétale dite phase support continue non aqueuse qui est appliquée par pulvérisation sous forme liquide.

9. Procédé selon la revendication 8 dans lequel ladite huile végétale est l'huile de pépins de raisin ; et ladite composition comprend en outre du dioxyde de titane.

10. Procédé selon la revendication 1 dans lequel ladite composition de retardateur de surface est appliquée par pulvérisation sur la surface d'un béton, d'un mortier ou d'une autre composition cimentaire, puis une partie de ladite surface est éliminée par pulvérisation d'eau.

11. Procédé selon la revendication 1 dans lequel ladite composition de retardateur de surface est appliquée par pulvérisation sur un moule à béton, puis un béton, un mortier ou une autre composition cimentaire est versé sur le moule à béton ayant reçu la composition de retardateur par pulvérisation.
